(19) Europäisches Patentamt
European Patent Office
Office européen des brevets

(11) **EP 2 901 291 B1**

(12) **FASCICULE DE BREVET EUROPEEN**

(45) Date de publication et mention
de la délivrance du brevet:
**14.12.2016 Bulletin 2016/50**

(51) Int Cl.:
*G06F 12/02* (2006.01)    *G06F 12/14* (2006.01)

(21) Numéro de dépôt: **14717451.0**

(86) Numéro de dépôt international:
**PCT/EP2014/057520**

(22) Date de dépôt: **14.04.2014**

(87) Numéro de publication internationale:
**WO 2014/170266 (23.10.2014 Gazette 2014/43)**

(54) **PROCÉDÉ DE GESTION DES RESSOURCES MÉMOIRE D'UN DISPOSITIF DE SÉCURITÉ, TEL QU'UNE CARTE À PUCE, ET DISPOSITIF DE SÉCURITÉ METTANT EN OEUVRE LEDIT PROCÉDÉ.**

VERFAHREN ZUR VERWALTUNG DER SPEICHERRESSOURCEN EINER SICHERHEITSVORRICHTUNG, Z. B. EINER CHIPKARTE, UND SICHERHEITSVORRICHTUNG ZUR DURCHFÜHRUNG DES VERFAHRENS

METHOD FOR MANAGING THE MEMORY RESOURCES OF A SECURITY DEVICE, SUCH AS A SMART CARD, AND SECURITY DEVICE IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2013 FR 1353411**

(43) Date de publication de la demande:
**05.08.2015 Bulletin 2015/32**

(73) Titulaire: **Morpho**
**92130 Issy-les-Moulineaux (FR)**

(72) Inventeur: **DUMAS, Pascal**
**F-92130 Issy Les Moulineaux (FR)**

(74) Mandataire: **Le Guen-Maillet**
**5, place de Newquay**
**BP 70250**
**35802 Dinard Cedex (FR)**

(56) Documents cités:
**EP-A1- 2 075 728**

**Description**

La présente invention concerne un procédé de gestion des ressources mémoire d'un dispositif de sécurité, tel une carte à puce, pouvant être amené à manipuler des informations confidentielles. La présente invention trouve un intérêt particulier, par exemple dans tout type de dispositif de sécurité, tel que carte à puce, carte bancaire, carte SIM, dispositif dit "Embedded SIM card", etc. qui comprend une unité de traitement, telle qu'un microcontrôleur, pour manipuler des informations confidentielles, ladite unité de traitement étant pourvue d'un système d'exploitation assurant notamment les fonctions de gestion des ressources du dispositif de sécurité et, par conséquent, de ses ressources mémoire.

Un tel dispositif de sécurité, une carte à puce en particulier, dispose de trois types de mémoire : une mémoire morte, dite aussi mémoire ROM (Read Only Memory), une mémoire vive, dite aussi mémoire RAM (Random Access Memory) et une mémoire à lecture seule et électriquement programmable et effaçable, dite aussi mémoire EEPROM (Electrical Erasable Programmable Read Only Memory). Les données qui sont stockées dans la mémoire ROM le sont de manière définitive. Il peut s'agir de programmes, tels que le système d'exploitation du dispositif de sécurité. Dans les deux autres mémoires, les données sont stockées temporairement. Plus particulièrement, la mémoire RAM est utilisée pour des données qui doivent être fréquemment mises à jour mais également pour des données temporaires qui nécessitent un fort degré de confidentialité, telles que des données de sécurité, par exemple des données cryptographiques de chiffrement.

Généralement, les données qui sont stockées en mémoire, quel que soit le type de cette dernière, le sont sous forme d'objets informatiques. Ces objets informatiques peuvent être de différents types : il peut s'agir d'applications ou de données. Chaque objet informatique contient un certain nombre d'attributs le caractérisant et des méthodes correspondant aux traitements qui peuvent être opérés sur ledit objet. Le système d'exploitation du dispositif de sécurité ainsi que les programmes informatiques en cours sont prévus pour pouvoir représenter, stocker et manipuler ces objets et, ce, avec le plus de sécurité possible. A cette fin, ils mettent en oeuvre également des fonctions de sécurité.

Néanmoins, afin de contourner ces fonctions de sécurité, des attaques ont pour objet la perturbation de la mémoire, notamment en modifiant les valeurs de données sensibles qui y sont stockées. Pour se prémunir de ces attaques et ainsi protéger les données sensibles qui sont stockées en mémoire, des mécanismes de contrôle d'intégrité hardware et software sont généralement mis en place. Il peut par exemple s'agir de duplication de données, d'ajout de données complémentaires, ou d'ajout aux données de somme de contrôle. Or, le principal inconvénient de ces mécanismes est qu'ils nécessitent un espace mémoire supplémentaire, alors que celui-ci est une ressource limitée et coûteuse.

Pour résoudre ce problème, un procédé de gestion des ressources mémoire d'un dispositif de sécurité, tel qu'une carte à puce, comporte une étape de formatage d'un espace mémoire alloué à une session pour le stockage d'objets informatiques, et, mise en oeuvre à chaque création d'un objet informatique, une étape d'allocation d'un bloc mémoire dans ledit espace mémoire pour le stockage dudit objet informatique en création.

On connaît, par exemple, le document EP-A-2075728 qui décrit un tel procédé pour la protection de code qui alloue un grand espace mémoire pour le code de ce programme. Une adresse mémoire est obtenue de manière aléatoire et permet à la fonction de déchiffrage d'être exécutée à cette adresse.

La présente invention a pour but d'améliorer encore ce procédé notamment en optimisant le stockage d'objets informatiques dans l'espace mémoire alloué à la session.

Pour ce faire, et selon l'invention, ledit procédé comporte en outre :

- une étape de partition de l'espace mémoire alloué à une session en, d'une part, un premier sous-espace mémoire dont la première adresse est déterminée en fonction d'un nombre aléatoire ou pseudo-aléatoire et dont la dernière adresse est la dernière adresse dudit espace mémoire alloué et, d'autre part, un second sous-espace mémoire dont la première adresse est la première adresse dudit espace mémoire alloué et dont la dernière adresse est l'adresse précédant la première adresse dudit premier sous-espace,

l'étape d'allocation d'un bloc mémoire comportant une étape de recherche d'un bloc mémoire allouable effectuée d'abord dans ledit premier sous-espace mémoire puis, éventuellement, dans ledit second sous-espace mémoire.

La présente invention concerne également un dispositif de sécurité, tel qu'une carte à puce, comprenant une unité de traitement pourvue d'un système d'exploitation et au moins une mémoire, ledit dispositif de sécurité étant caractérisé en ce que ledit système d'exploitation est prévu pour pouvoir mettre en oeuvre le procédé de gestion ci-dessus exposé.

La présente invention concerne encore un programme implémenté sur un support mémoire d'un dispositif de sécurité, tel qu'une carte à puce, qui comprend une unité de traitement pourvue d'un système d'exploitation et au moins une mémoire, ledit programme étant susceptible d'être mis en oeuvre au sein dudit système d'exploitation et comprenant des instructions pour la mise en oeuvre d'un procédé de gestion conforme à celui qui est ci-dessus exposé.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est une vue schématique d'une carte à puce,

La Fig. 2 est une vue illustrant un procédé de gestion des ressources mémoire selon l'état de la technique pour l'allocation de blocs mémoire à des objets informatiques,

La Fig. 3 est une vue illustrant un procédé de gestion des ressources mémoire selon l'invention pour l'allocation de blocs mémoire à des objets informatiques, et

La Fig. 4 est un organigramme d'un procédé de gestion de ressources mémoire selon la présente invention.

Dans la présente invention, on appelle dispositif de sécurité un dispositif qui est amené à manipuler, c'est-à-dire écrire en mémoire, lire dans une mémoire, traiter au moyen d'algorithmes, etc. des données dont certaines portent des informations confidentielles. Parmi ces dispositifs de sécurité, on peut citer les cartes à puce, quelles qu'elles soient. Le reste de la description a pour objet une carte à puce, mais cela ne limite en rien l'invention.

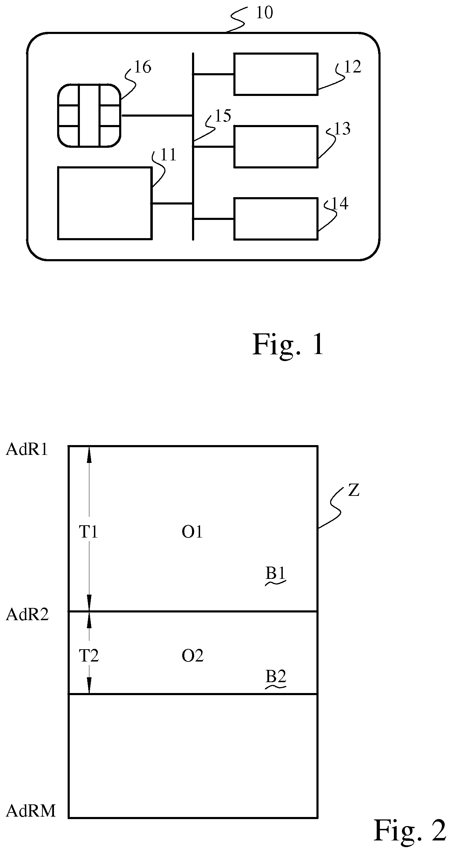

Le dispositif de sécurité qui est représenté à la Fig. 1 est donc une carte à puce qui est constituée d'un support plat 10 incorporant des circuits électroniques comportant une unité de traitement 11, telle qu'un microprocesseur ou microcontrôleur, et au moins trois mémoires 12 à 14 respectivement du type mémoire morte, dite aussi mémoire ROM (Read Only Memory), mémoire vive, dite aussi mémoire RAM (Random Access Memory) et mémoire à lecture seule et électriquement programmable et effaçable, dite aussi mémoire EEPROM (Electrical Erasable Programmable Read Only Memory). L'unité de traitement 11 et les mémoires 12 à 14 sont reliées entre elles via un bus 15 auquel est également reliée une interface de connexion 16.

Dans la mémoire ROM de la carte à puce, est enregistré son système d'exploitation qui permet à l'unité de traitement 11 de gérer les différentes ressources présentes sur la carte, et notamment les ressources mémoire.

Quant aux mémoires RAM et EEPROM, elles permettent de stocker temporairement des objets informatiques qui peuvent être de différents types : il peut s'agir d'applications ou de données. Chaque objet informatique contient un certain nombre d'attributs caractérisant ledit objet et des méthodes correspondant aux traitements qui peuvent être opérés sur ledit objet.

Pour une description plus détaillée d'une carte à puce, il est possible de se reporter au document de normalisation ISO 7816 - 3.

Le fonctionnement d'une carte à puce est sommairement le suivant. A l'introduction de cette carte dans un lecteur de carte approprié, les circuits électroniques 11 à 14 sont alimentés et une nouvelle session peut commencer. Celle-ci est par exemple déclenchée par un message approprié, encore appelé unité APDU (Application Protocol Data Unit : unité de données de protocole applicatif), transmis par le lecteur, via l'interface 16. Cette unité de données ADPU déclenche la sélection d'un certain nombre d'applications (parfois appelées applets) et leur exécution par l'unité de traitement 11. Ces applications ont pour effet de manipuler des données et d'émettre à leur tour en direction du lecteur des unités de données ADPU.

Dans le présent brevet, une session n'est pas nécessairement définie comme l'ensemble des processus mis en oeuvre entre l'introduction de la carte à puce dans le lecteur et son retrait, mais plutôt comme l'ensemble des processus mis en oeuvre par un ensemble défini, par exemple dans une unité de données APDU transmise par le lecteur, d'applications exécutées par l'unité de traitement 11.

Au lancement d'une session, un espace mémoire Z de dimension M est rendu disponible par formatage. Cet espace mémoire Z a l'adresse la plus basse AdR1 et l'adresse la plus haute AdRM (voir Fig. 2).

Pendant une telle session, des objets informatiques sont créés puis effacés aussi bien en mémoire RAM qu'en mémoire EEPROM. A la création d'un objet informatique (en JAVA, cette création est par exemple réalisée au moyen de l'opérateur new), un bloc mémoire allouable, c'est-à-dire disponible, est recherché dans l'espace mémoire Z et est alloué à l'objet en création. Un bloc mémoire alloué est essentiellement caractérisé par une adresse de référence et par une taille liée à la taille de l'objet qui, elle, dépend étroitement des attributs et des méthodes que celui-ci comporte.

A la Fig. 2, on a représenté un espace mémoire Z qui a été rendu disponible par formatage ainsi qu'un objet O1 qui occupe un bloc mémoire B1 défini par son adresse de référence AdR1, correspondant ici à l'adresse basse de la zone mémoire Z, et par sa taille T1. A la création de l'objet 02, l'adresse de référence AdR2 du bloc mémoire B2 susceptible de l'accueillir est déterminée. Sa taille T2 correspond à celle de l'objet 02.

Une fois qu'il a été utilisé, un objet informatique voit son bloc mémoire libéré pour d'éventuels autres objets.

Pour pouvoir les manipuler, les données sensibles d'une carte mémoire, telles que des identificateurs de titulaire de la carte, les mots de passe, etc. sont stockées en mémoire, à l'instar de toutes données, sous la forme d'objets informatiques. Pour des raisons de sécurité, elles le seront de la manière la plus fugitive possible et pour ce faire, elles seront généralement stockées en mémoire RAM.

Or, on a remarqué que les objets informatiques ainsi créés le sont souvent aux mêmes adresses de référence, notamment pour des sessions de type identique (c'est-à-dire des sessions qui sélectionnent et exécutent les mêmes applications). Cela s'avère être une brèche pour des attaques de la carte à puce, qui utilisent souvent la répétition d'une même opération un nombre de fois important.

La présente invention cherche à résoudre ce problème.

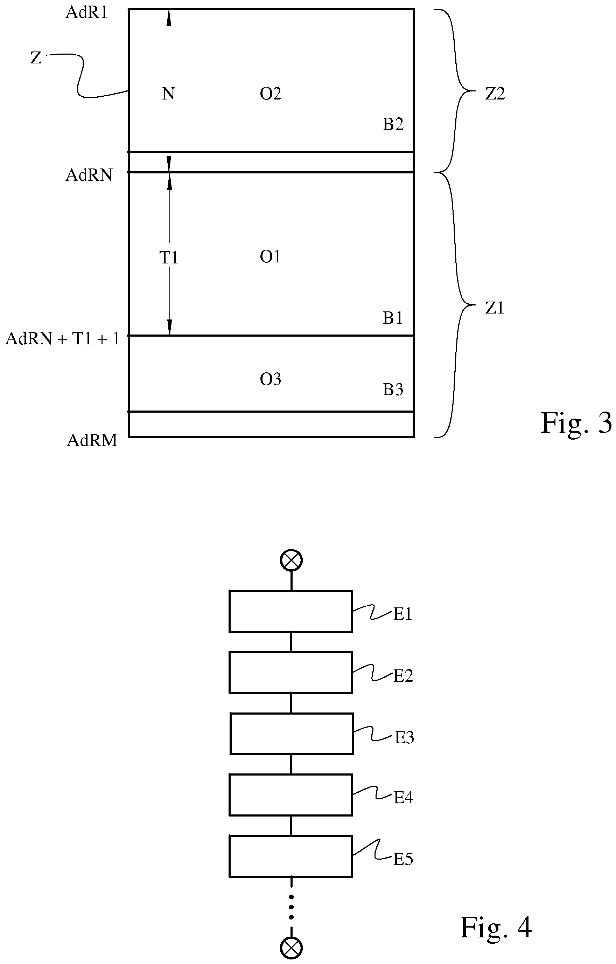

A l'instar de l'état de la technique, au lancement d'une session, un espace mémoire Z de dimension M est rendu disponible par formatage et alloué à la session. Néanmoins, comme cela est représenté à la Fig. 3, l'espace mémoire Z alloué à la session est partitionné en un premier sous-espace mémoire Z1 dont la première adresse à l'intérieur de l'espace Z est AdRN, déterminée en fonction d'un nombre aléatoire ou pseudo aléatoire, et dont la dernière adresse correspond à la dernière adresse de l'espace mémoire Z, soit AdRM, et en un second sous-espace mémoire Z2 dont la première adresse est la première adresse de l'espace mémoire Z, soit AdR1, et la dernière adresse correspond à l'adresse précédant la première adresse du premier sous-espace mémoire, soit AdRN - 1.

La première adresse AdRN du premier sous-espace mémoire Z1 est par exemple déterminée en sommant la première adresse AdR1 de l'espace mémoire Z à un nombre aléatoire ou pseudo aléatoire N, soit :

$$AdRN = AdR1 + N$$

Selon une autre caractéristique de l'invention, à la création d'un objet Oi, un bloc susceptible d'être alloué audit objet Oi est recherché d'abord dans le premier sous-espace mémoire Z1, puis, éventuellement, dans le second sous-espace mémoire Z2. Cette étape de recherche est suivie de l'allocation elle-même d'un bloc Bi audit objet Oi.

A la Fig. 3, le premier bloc B1 susceptible d'accueillir l'objet O1 est créé dans le sous-espace mémoire Z1, avec son adresse de référence correspondant à l'adresse AdRN. Le second bloc B2 susceptible d'accueillir l'objet 02 a une taille T2 supérieure à la dimension de l'espace libre dans le sous-espace mémoire Z1. Si T1 est la taille de l'objet O1, la dimension de cet espace libre est :

$$AdRM - (AdRN + T1)$$

Alors le bloc B2 est créé dans le sous-espace mémoire Z2 avec pour adresse de référence AdR1.

Par contre, le bloc B3 susceptible d'accueillir l'objet 03 a une taille T3 inférieure à la dimension de l'espace libre dans le sous-espace mémoire Z1. Il est donc créé dans le sous-espace mémoire Z1 avec pour adresse de référence, l'adresse AdRN + T1 + 1.

Ainsi, à deux sessions différentes, pour un même type de session, les adresses de références d'un même objet se trouvent être différentes et, ce, de manière aléatoire ou pseudo-aéatoire, puisque, pour chacune d'elles, le nombre N sera différent. Il en résulte que des attaques basées sur la répétition d'une même opération deviennent inopérantes car non-corrélables les unes aux autres. Par ailleurs, ce résultat est atteint sans sur-consommation d'espace-mémoire. En effet, on remarquera que la taille de l'espace mémoire utilisé par les trois objets O1, O2 et 03, à la Fig. 3, est la même que celle utilisée par les mêmes objets sans la partition de l'espace Z en deux sous-espaces Z1 et Z2 tel qu'il est décrit ci-dessous.

A la Fig. 4, on a représenté un organigramme d'un procédé de gestion de ressources mémoire selon l'invention. Ce procédé est mis en oeuvre suite au lancement d'une session, par exemple par l'introduction de la carte concernée dans un lecteur approprié.

L'étape E1 est une étape de formatage d'un espace mémoire Z, par exemple en mémoire RAM ou EEPROM, alloué à la session qui vient d'être lancée pour le stockage des objets informatiques qui seront créés lors de cette session.

L'étape E2 est une étape de partition de l'espace mémoire alloué Z en un premier sous-espace mémoire Z1 et un second sous-espace mémoire Z2 comme cela a été exposé précédemment en relation avec la Fig. 3.

Les étapes E3, E4 et E5 sont des étapes d'allocation de blocs mémoire respectivement à trois objets informatiques en création et, ce, de la manière ci-dessus exposée en relation avec la Fig. 3.

D'autres objets peuvent être créés de la sorte, de même que certains peuvent être effacés pour libérer l'espace mémoire. A la fin de la session, la mise en oeuvre du procédé est interrompue.

## Revendications

1.  Procédé de gestion des ressources mémoire d'un dispositif de sécurité, tel qu'une carte à puce, du type comportant :

    une étape (E1) de formatage d'un espace mémoire alloué à une session pour le stockage d'objets informatiques, et
    mise en oeuvre à chaque création d'un objet informatique, une étape (E1, E2, E3, ...) d'allocation d'un bloc mémoire (B) dans ledit espace mémoire (Z) pour le stockage dudit objet informatique en création,
    **caractérisé en ce qu'**il comporte en outre :

    une étape (E2) de partition de l'espace mémoire (Z) alloué à une session en, d'une part, un premier sous-espace mémoire (Z1) dont la première adresse (AdRN) est déterminée en fonction d'un nombre (N) aléatoire ou pseudo-aléatoire et dont la dernière adresse est la dernière adresse (AdRM) dudit espace mémoire alloué (Z) et, d'autre part, un second sous-espace mémoire (Z2) dont la première adresse est la première adresse (AdR1) dudit espace mémoire alloué (Z) et dont la dernière adresse est l'adresse (AdRN-1) précédant la première adresse (AdRN) dudit premier sous-espace (Z1),

et **en ce que** l'étape (E3, E4, E5, ...) d'allocation d'un bloc mémoire comporte une étape de recherche d'un bloc mémoire allouable effectuée d'abord dans ledit premier sous-espace mémoire (Z1) puis, éventuellement, dans ledit second sous-espace mémoire (Z2).

**2.** Dispositif de sécurité, tel qu'une carte à puce, comprenant une unité de traitement (11) pourvue d'un système d'exploitation et une mémoire (12, 13, 14), **caractérisé en ce que** ledit système d'exploitation est prévu pour pouvoir mettre en oeuvre un procédé de gestion selon la revendication 1.

**3.** Programme implémenté sur un support mémoire d'un dispositif de sécurité, tel qu'une carte à puce, qui comprend une unité de traitement (11) pourvue d'un système d'exploitation et une mémoire (12, 13, 14), ledit programme étant susceptible d'être mis en oeuvre au sein dudit système d'exploitation et comprenant des instructions pour la mise en oeuvre d'un procédé de gestion selon la revendication 1.

**Patentansprüche**

**1.** Verfahren zur Verwaltung von Speicherressourcen einer Sicherheitsvorrichtung, wie einer Chipkarte, in der Art, die folgendes umfasst:

einen Schritt (E1), der darin besteht, einen Speicherbereich, der einer Session für das Speichern von Rechnerobjekten zugewiesen ist, zu formatieren, und bei jeder Erstellung eines Rechnerobjekts, einen Schritt (E1, E2, E3..) umzusetzen, der darin besteht, dem Speichern des genannten, sich in der Erstellung befindlichen Rechnerobjekts, einen Speicherblock (B) in dem genannten Speicherbereich (Z) zuzuweisen, **dadurch gekennzeichnet, dass** das Verfahren zudem folgendes umfasst:

einen Schritt (E2), der darin besteht, den, einer Session zugewiesenen Speicherbereich (Z), zum einen, in einen ersten Unter-Speicherbereich (Z1), dessen erste Adresse (AdRN) in Abhängigkeit von einer Zufalls- oder Pseudozufalls-Zahl (N) bestimmt wird und dessen letzte Adresse die letzte Adresse (AdRM) des genannten zugewiesenen Speicherbereichs (Z) ist, und, zum anderen, in einen zweiten Unter-Speicherbereich (Z2), dessen erste Adresse die erste Adresse (AdR1) des genannten zugewiesenen Speicherbereichs (Z) ist und dessen letzte Adresse die Adresse (ADRN-) vor der ersten Adresse (AdRN) des genannten ersten Unterbereichs (Z1) ist, zu partitionieren, und dadurch, dass der, in der Zuweisung eines Speicherblocks bestehende Schritt (E3, E4, E5, usw.), einen Schritt umfasst, der darin besteht, einen zuweisbaren Speicherblock zuerst in dem genannten ersten Unter-Speicherbereich (Z1), danach eventuell in dem genannten zweiten Unter-Speicherbereich (Z2) zu suchen.

**2.** Sicherheitsvorrichtung, wie eine Chipkarte, umfassend eine, mit einem Betriebssystem und einem Speicher (12, 13, 14) ausgestattete Verarbeitungseinheit (11), **dadurch gekennzeichnet, dass** das genannte Betriebssystem dazu vorgesehen ist, das Verwaltungsverfahren nach Patentanspruch 1 umzusetzen.

**3.** Auf einem Speichermedium einer Sicherheitsvorrichtung, wie einer Chipkarte, implementiertes Programm, das eine, mit einem Betriebssystem und einem Speicher (12, 13, 14) ausgestattete Verarbeitungseinheit (11) umfasst, wobei das genannte Programm möglicherweise in dem genannten Betriebssystem umgesetzt wird und Anweisungen zur Umsetzung eines Verwaltungsverfahrens nach Patentanspruch 1 umfasst.

**Claims**

**1.** Method for managing memory resources of a security device, such as a chip card, of the type comprising:

a step (E1) of formatting a memory space allocated to a session for storing computer objects, and implemented at each creation of a computer object, a step (E1, E2, E3,...) of allocating a memory block (B) in said memory space (Z) storing said computer object being created, **characterised in that** it further comprises:

a step (E2) of partitioning the memory space (Z) allocated to a session into firstly a first memory subspace (Z1) the first address (AdRN) of which is determined according to a random or pseudorandom number (N) and the last address of which is the last address (AdRM) of said allocated memory space (Z), and secondly a second memory subspace (Z2) the first address of which is the first address (AdR1) of said allocated memory space (Z) and the last address of which is the address (AdRN-1) preceding the first address(AdRN) of said first subspace (Z1),

and **in that** the step (E3, E4, E5, ...) of allocating a memory block comprises a step of seeking an allocatable memory block performed first of all in said first memory subspace (Z1) and then if necessary in said second memory subspace (Z2).

2. Security device, such as a chip card, comprising a processing unit (11) provided with an operating system and a memory (12, 13, 14), **characterised in that** said operating system is designed so as to be able to implement the management method according to claim 1.

3. Program implemented on a memory medium of a security device, such as a chip card, which comprises a processing unit (11) provided with an operating system and a memory (12, 13, 14), said program being able to be implemented in said operating system and comprising instructions for implementing a management method according to claim 1.

**Fig. 1**

**Fig. 2**

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2075728 A